# EUROPEAN PATENT APPLICATION

(11) **EP 2 525 621 A1**
(43) Date of publication of application: **21.11.2012**
(21) Application number: 10842830.1
(22) Date of filing: 13.01.2010
(51) Int. Cl.: H04W 88/02

(54) **METHOD AND DEVICE IN USER TERMINAL FOR SELECTING ACCESS BASE STATION**

(71) Applicant: Alcatel Lucent, 75007 Paris (FR)
(72) Inventor: JIANG, Qi, Shanghai 201206 (CN); SHEN, Gang, Shanghai 201206 (CN); ZHANG, Kaibin, Shanghai 201206 (CN)
(74) Representative: Schacht, Mirko
(86) International application number: PCT/CN2010/070152
(87) International publication number: WO 2011/085546

(57) **Abstract**

The invention proposes a method of selecting an access base station in a user equipment of a wireless communication network, and the method generally includes the steps of: the user equipment selecting, among at least one base station, a small power base station preferably to perform an access, wherein a signal of each of the at least one base station covers the user equipment. Also the invention proposes a selecting access apparatus for selecting an access base station corresponding to the method. In an application scenario of the heterogeneous network including both small power base stations and macro base stations, the invention enables balanced usage of access resources in the heterogonous network while avoiding interference resulting from the preferable access to a macro base station with larger transmission power to thereby improve the overall performance of the heterogonous network and particularly a heterogonous network involving a hot zone.

## Description

### Field of the invention

The present disclosure relates to a wireless communication network and particularly to a method and apparatus for selecting an access base station when a user equipment is powered on in the wireless communication network.

### Background of the invention

In a wireless communication network, the network constituted of a specific area covered by the network composed of a plurality of base stations (e.g., a macro base station and other small power base stations) is referred to a heterogeneous network. At present in a wireless communication network involving a heterogeneous network, a User Equipment (UE) selects a base station for an access and a cell corresponding thereto based upon the reference signal receiving strength principle when the user equipment is powered on such that the user equipment selects for an access only a base station corresponding to the receiving signal with the largest signal strength while disregarding other base stations/cells. Small power base stations (home eNBs/family eNBs) are generally introduced in the heterogeneous network, but few user equipments will select a small power base station for an access as a result of the foregoing principle of the user equipment selecting the cell/base station, thus resulting in the unbalanced accesses of the user equipments in the heterogeneous network and the consequential waste of wireless access resources. And also more user equipments select for an access a macro eNB with the largest transmission signal strength, which also results in more wireless interference with an adjacent cell, thus degrading the overall performance of the network. This will become particularly serious in the case of a hot-zone in the wireless communication network.

### Summary of the invention

The invention proposes a method and an apparatus for selecting an access base station/cell when a user equipment is powered on in order to solve the foregoing problems of increased wireless interference, wasted access resources of the small power base station and lowered network performance due to the access of the user equipment under the principle of the largest signal receiving strength.

According to an embodiment of the invention, there is provided a method, in a user equipment of a wireless communication network, of selecting an access base station. The method comprises the step of: the user equipment selecting, among all base stations with signals covering the user equipment, a small power base station preferably to perform an access.

According to another embodiment of the invention, there is provided a selecting access apparatus, in a user equipment of a wireless communication network, for selecting an access base station. The apparatus comprises: a base station selecting module for selecting a small power base station preferably among all base stations with signals covering the user equipment; and an access module for performing the access of the user equipment to the selected small power base station. According to another embodiment of the invention, if there is no small power base station among the all base stations with signals covering the user equipment, then selecting, among a plurality of macro base stations, a macro base station with largest signal strength of a corresponding receiving signal at the side of the user equipment to perform an access.

With the method and apparatus of the invention, particularly in an application scenario of the heterogonous network, if both a small power base station and a macro base station are available to a user equipment to perform an access in the network, then the user equipment selects the small power base station preferably to perform the access instead of selecting only a signal source base station corresponding to a signal with the largest signal strength received by the user equipment to perform the access. This enables the balanced usage of access resources in the heterogonous network while avoiding interference resulting from the preferable access to a macro base station with larger transmission power to thereby improve the overall performance of the heterogonous network and particularly a heterogonous network involving a hot zone.

### Brief description of drawings

Other features, objects and advantages of the invention will become more apparent from the following detailed description of non-limiting embodiments with reference to the drawings.
Fig.1 is a schematic diagram of a topology of a wireless network communication system according to an embodiment of the invention;
Fig.2 is a flow chart of a method, in a user equipment, of selecting an access base station according to an embodiment of the invention;
Fig.3 is a flow chart of a method for a user equipment to select a small power base station prefereably to perform an access according to an embodiment of the invention;
Fig.4 is a structural block diagram of an selecting access apparatus for selecting an access base station in a user equipment of a wireless communication network according to an embodiment of the invention; and
Fig.5 is a structural diagram of a base station selecting module in the selecting access apparatus according to an embodiment of the invention.

In the drawings, identical or similar reference numerals designate identical or similar step features or devices (modules).

### Detailed description of embodiments

Embodiments of the invention will be detailed illustratively below with reference to the drawings.

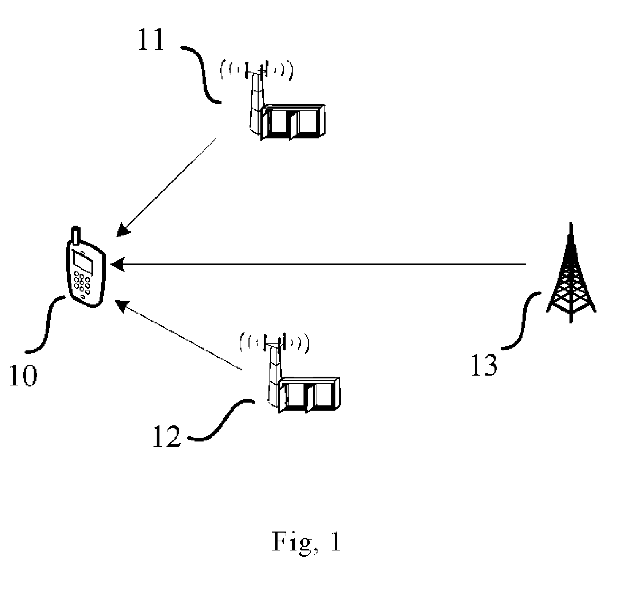

Fig.1 is a schematic diagram of a topology of a wireless network communication system according to an embodiment of the invention, where the wireless network communication system includes a user equipment 10, a macro base station 13, a small power base station 12 and a small power base station 11. In addition, the wireless network communication system further comprises a macro base station MeNB2, a macro base station MeNB1 and a small power base station HeNB3 which are not illustrated. The three macro base stations and the three small power base stations constitute a heterogeneous communication network and cover in an overlapping manner an area where the user equipment 10 is located. Wherein connections between the macro base station 13, the macro base station MeNB2 and the macro base station MeNB1 on one hand and the small power base station 12, the small power base station 11 and the small power base station HeNB3 on the other hand can be wired or wireless.

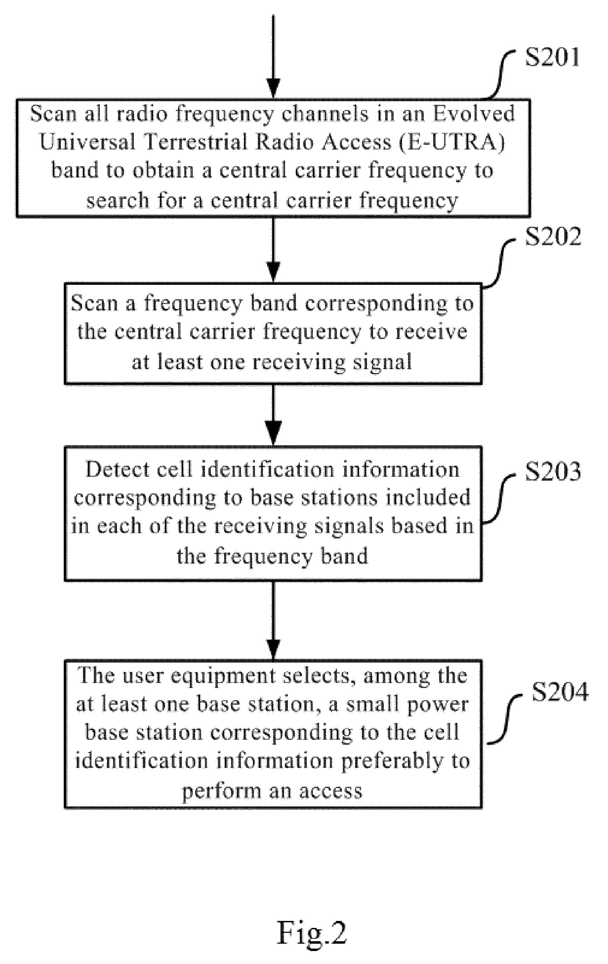

Fig.2 is a flow chart of a method, in the user equipment 10, of selecting an access base station according to an embodiment of the invention.

Firstly the user equipment 10 performs the step S201 of scanning radio frequency channels to obtain a central carrier frequency when the user equipment is powered on.

Next the user equipment performs the step S202 of scanning a frequency band corresponding to the central carrier frequency obtained in the step S201 to obtain receiving signals and signal strength information corresponding thereto.

Then the user equipment performs the step S203 of detecting cell identification information included in each of the receiving signals based upon contents of the receiving signals, wherein the detected cell identification information corresponds to the small power base stations and the macro base stations in the heterogeneous network of Fig.1.

Then the step S204 is performed. The user equipment selects, among the base stations corresponding to the cell identification information obtained in the step S203, a small power base station preferably to perform an access.

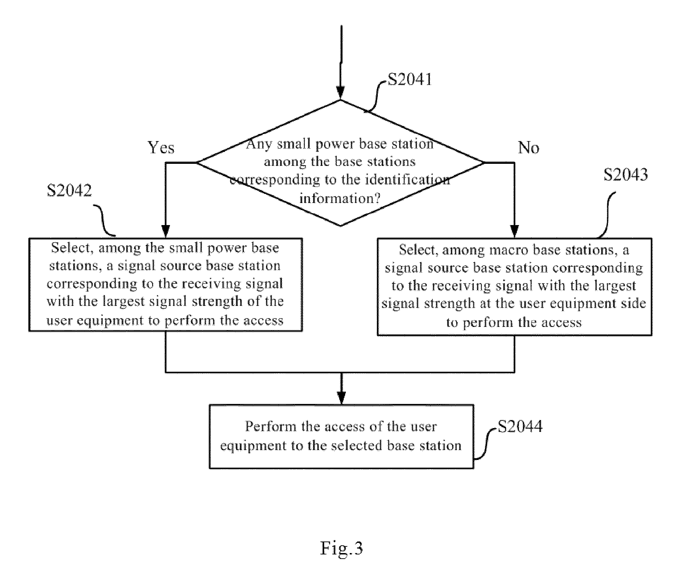

Fig.3 illustrates a flow chart of a method for a user equipment to select a small power base station preferably to perform the access according to an embodiment of the invention.

Firstly the step S2041 is performed to determine whether small power base stations exist among the base stations corresponding to the cell identification information obtained in the step S203.

If the result is "Yes", then the step S2042 is performed to select, among the existing small power base stations, a signal source base station corresponding to the receiving signal with the largest signal strength at the user equipment side to perform the access.

If the result is "No", then the step S2043 is performed to select, among macro base stations, a signal source base station corresponding to the receiving signal with the largest signal strength at the user equipment side to perform the access.

The method, in a user equipment, of selecting an access base station according to the invention will be further discussed in detail below with reference to Fig.1, Fig.2 and Fig.3.

According to an embodiment of the invention, the user equipment 10 in the wireless network communication system of Fig.1 is covered in an overlapping manner by the macro base station 13, the small power base station 12 and the small power base station 11 as well as a macro base station MeNB2, a macro base station MeNB1 and a small power base station HeNB3. When the user equipment 10 is powered on, the user equipment receives a signal S_{M3} at power of 41dBm from the macro base station 13; receives a signal S_{H2} at power of 19dBm from the small power base station 12 and a signal S_{H1} at power of 23dBm from the small power base station 11 respectively; receives a signal S_{M2} at power of 7dBm from the macro base station MeNB2 and a signal S_{M1} at power of 11dBm from the macro base station MeNB1 respectively; and receives a signal S_{H3} at power of 9dBm from the small power base station HeNB3. For the sake of simplicity, the signals received by the user equipment 10 from the respective base station have not been illustrated in Fig. 1.

After the user equipment 10 is powered on, the user equipment firstly performs the step S201 of Fig.2 to scan all radio frequency channels in an Evolved Universal Terrestrial Radio Access (E-UTRA) band to search for a central carrier frequency CCF (not illustrated).

Next the user equipment 10 performs the step S202 of further scanning a frequency band where the central carrier frequency CCF is located to obtain receiving signals in the frequency band: the signal S_{M1} (at the power of 11dBm), the signal S_{M3} (at the power of 41dBm), the signal S_{H2} (at the power of 19dBm), the signal S_{H1} (at the power of 23dBm), the signal S_{H3} (at the power of 9dBm) and the signal S_{M2} (at the power of 7dBm).

Then the user equipment 10 performs the step S203 of detecting cell identification information included in each of the receiving signals based upon contents of the receiving signals, wherein the detected cell identification information corresponds respectively to the small power base stations and the macro base stations in the heterogeneous network of Fig.1, for example, the base station 10 detects, based upon pilot signals in the receiving signals, that the cell identification information in the signal S_{M1} is CII _{M1} and corresponds to the macro base station MeNB1, the cell identification information in the signal S_{M3} is CII _{M3} and corresponds to the macro base station 13, the cell identification information in the signal S_{H2} is CII _{H2} and corresponds to the small power base station 12, the cell identification information in the signal S_{H1} is CII _{H1} and corresponds to the small power base station 11, the cell identification information in the signal S_{H3} is CII _{H3} and corresponds to the small power base station HeNB3, and the cell identification information in the signal S_{M2} is CII _{M2} and corresponds to the small power base station MeNB2.

Alternatively the user equipment 10 can detect the cell identification information included in the receiving signals S_{M1} and like based upon synchronization signals or reference signals in the receiving signals, and a repeated description thereof will be omitted here.

According to another embodiment of the invention, before the step S203 or in the step S202, the user equipment 10 presets a signal strength threshold V_{threshold}=19dBm (not illustrated) and selects receiving signals with signal strength greater than or equal to the predetermined value. Base stations and receiving signal strength corresponding thereto at the user equipment 10 side configured in this embodiment are the signal S_{M3} at power of 41dBm from the macro base station 13; the signal S_{H2} at power of 19dBm from the small power base station 12 and the signal S_{H1} at power of 23dBm from the small power base station 11 respectively; the signal S_{M2} at power of 7dBm from the macro base station MeNB2 and the signal S_{M1} at power of 11dBm from the macro base station MeNB1 respectively; and the signal S_{H3} at power of 9dBm from the small power base station HeNB3. And based on the power values, the user equipment 10 can determine that among the signals from the base stations, the receiving signals with signal strength greater than or equal to the threshold V_{threshold} preset by the user equipment 10 are only the signal S_{H2}, the signal S_{H1} and the signal S_{M3}. Then in the step S203, only cell identification information included in the receiving signals S_{H2}, S_{H1} and S_{M3} with signal strength greater than the predetermined threshold is detected respectively as CII _{H2}, CII _{H1} and CII _{M3}, and thus sources thereof are determined respectively as the small power base station 12, the small power base station 11 and the macro base station 13. And in subsequent steps, the process is performed for the small power base station 12, the small power base station 11 and the macro base station 13.

Then the user equipment 10 performs the step S204 of selecting a small power base station, e.g., the small power base station 12, the small power base station 11 or the small power base station HeNB3, preferably among the base stations corresponding to the cell identification information obtained in the step S203 and performs the access according to the cell identification information included in the receiving signal corresponding thereto at the user equipment 10 side. According to another embodiment of the invention, all the signals from the base stations are filtered with the signal strength threshold V_{threshold} being a lower limit before the step S203, as described above, and only signals S_{H1} and S_{H2} among filtering results are signals from small power base stations, and the signal with stronger signal strength between S_{H1} and S_{H2} is the signal S_{H1}. The signal S_{H1} includes the cell identification information CII _{H1} and corresponds to the small power base station 11. Then the user equipment 10 selects the base station 11 to perform the access.

According to an embodiment of the invention, the user equipment 10 firstly performs the step S2041 illustrated in Fig.3 of determining whether there are small power base stations among the base stations corresponding to the cell identification information obtained in the step S203. Specifically the user equipment 10 determines that the base station 11, the base station 12 and the base station HeNB3 respectively corresponding to the signal S_{H1}, the signal S_{H2} and the signal S_{H3} are all small power base stations.

According to the result of performing the step S2041, the user equipment 10 next performs the step S2042 of selecting any one of the above three small power base stations to perform the access. Preferably the user equipment 10 selects, among the three small power base stations, a signal source base station corresponding to the receiving signal with the largest signal strength to perform the access. Specifically the user equipment 10 determines that, among the small power base stations, the receiving signal with the largest signal strength at the user equipment 10 side is the signal S_{H1} and the small power base station corresponding to the signal S_{H1} is the base station 11, and then the user equipment 10 selects the base station 11 to perform the access.

If the result of determination in the step S2041 is "No", for example, according to another embodiment of the invention, only three macro base stations, i.e., the macro base station MeNB1, the macro base station MeNB2 and the macro base station 13, are configured in the communication system, and correspondingly the power of the signal S_{M1} is 11dBM, the power of the signal S_{M3} is 41 dBM, and the power of the signal S_{M2} is 7dBM, then the user equipment 10 performs the step S2043 of selecting the macro base station 13 corresponding to the signal S_{M3} with the largest signal strength among the above signals to perform the access.

Furthermore those skilled in the art shall appreciate that the signal strength threshold V_{threshold} can further be introduced to further optimize the technical solution of selecting an access base station so that the cell identification information included in each of the receiving signals is detected respectively in the step S203, and in the step S204, the user equipment 10 determines that only signals S_{H2}, S_{H1} and S_{M3} among the signals have signal strengths above the threshold V_{threshold} and detects that the cell identification information included in the signals S_{H2}, S_{H1} and S_{M3} are CII _{H2}, CII _{H1} and CII _{M3} respectively. The base stations corresponding to the cell identification information CII _{M3}, CII _{H1} and CII _{H2} are the macro base station 13 and the small power base stations 11 and 12 respectively. Then the user equipment 10 selects, among the three base stations, one of the small power base stations 11 and 12 preferably to perform the access. Further preferably, the receiving signals corresponding to the small power base stations 11 and 12 are the signals S_{H2} and S_{H1} in which the signal S_{H1} is of the largest signal strength, and then the user equipment 10 selects the base station 11 corresponding to the signal S_{H1} to perform the access. Those skilled in the art shall appreciate that the procedure that all the receiving signals are filtered with the threshold V_{threshold} in the step S203 as described above and the procedure that the base stations corresponding to the cell identification information are filtered directly with the signal strength threshold V_{threshold} in the step S204 instead of filtering all the receiving signals in the step S203 are substantially equivalent, which both come into the scope of the invention.

According to another embodiment of the invention, if only the macro base station MeNB2, the macro base station MeNB1 and the small power base station HeNB3 are configured in the communication network and their corresponding receiving signals S_{M2}, S_{M1} and S_{H2} at the user equipment 10 side are at power of 7dBm, 11dBm and 9dBm respectively, all of which are below the threshold V_{threshold}=19dBm preset in the user equipment 10, then the user equipment 10 selects, among the signals S_{M2}, S_{M1} and S_{H2}, the signal S_{M1} with the largest signal strength. The user equipment 10 determines that the macro base station corresponding to the signal S_{M1} is the base station MeNB1 and then selects the base station MeNB1 to perform the access. It shall be noted that if the information of the signal S_{M1} has been filtered out because it is below the threshold V_{threshold}=19dBm in the step S202, then the step S203 and the step S204 will be performed again on the signal S_{M1}.

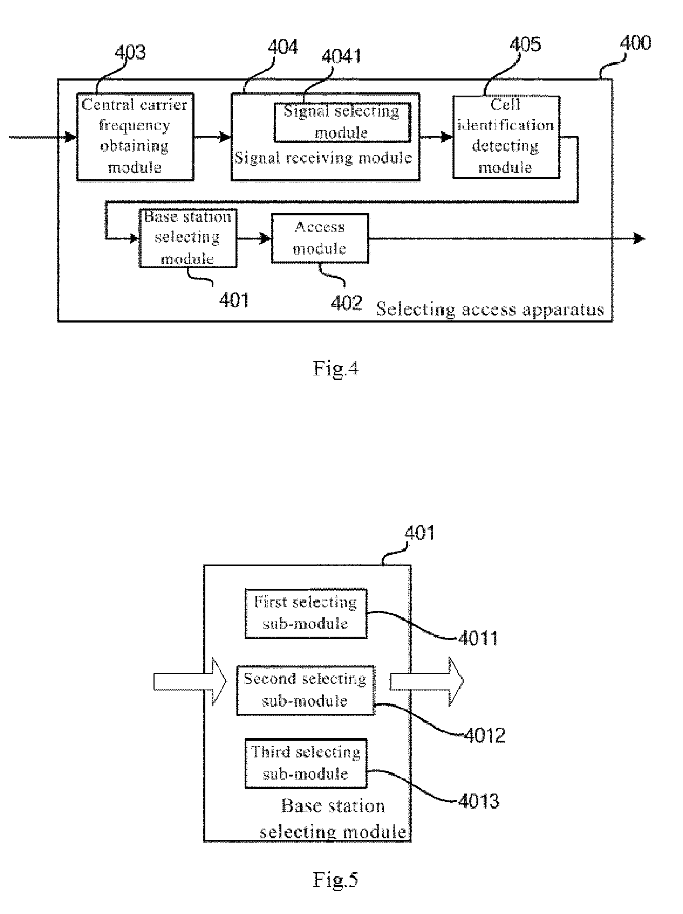

Fig.4 illustrates a structural block diagram of a selecting access apparatus 400 for selecting an access base station in the user equipment 10 of a wireless communication network according to another embodiment of the invention. As illustrated in Fig.4, the selecting access apparatus 400 includes a base station selecting module 401 for selecting a small power base station preferably among all base stations with signals covering the user equipment, and an access module 402 for performing the access of the user equipment 10 to the selected small power base station. The base station selecting module 401 is combined with the access module 402 to perform the selective access of the user equipment 10 to a base station with the signal covering the present use equipment.

In another embodiment of the invention, the selecting access apparatus 400 further comprises a central carrier frequency obtaining module 403, a signal receiving module 404 and a cell identification detecting module 405.

Firstly the central carrier frequency obtaining module 403 scans radio frequency channels to obtain a central carrier frequency CCF when the user equipment is powered on.

The signal receiving module 404 scans a frequency band corresponding to the central carrier frequency CCF to obtain receiving signals in the frequency band and also signal strength information of the receiving signals.

The cell identification detecting module 405 detects cell identity information CII (not illustrated) included in each of the receiving signals obtained by the signal receiving module 404.

Fig.5 illustrates a structural diagram of a base station selecting module in the selecting access apparatus according to an embodiment of the invention. The base station selecting module 401 includes a first selecting sub-module 4011, a second selecting sub-module 4012 and a third selecting sub-module 4013.

The three sub-modules perform the corresponding selection scheme respectively according to the different input condition. If there are small power base stations among base stations of the wireless network where the user equipment 10 is located, then the first selecting sub-module 4011 selects one of the small power base stations to perform an access, wherein among all the small power base stations, the selected small power base station corresponds to a receiving signal with the largest signal strength at the user equipment 10 side.

Alternatively if there are only macro base stations among base stations of the wireless network where the user equipment 10 is located, then the second selecting sub-module 4012 selects one of the macro base stations to perform an access, wherein, among all the macro base stations, the selected macro base station corresponds to a receiving signal with the largest signal strength at the user equipment 10 side.

Alternatively if there are both small power base stations and macro base stations among base stations of the wireless network where the user equipment 10 is located, then the third selecting sub-module 4013 selects one of the small power base stations to perform an access, wherein, among all the small power base stations, the selected small power base station corresponds to a receiving signal with the largest signal strength at the user equipment 10 side.

The operation of the selecting access apparatus in the user equipment 10 for selecting an access base station will be further discussed in details below with reference to Fgi.1, Fig.4 and Fig.5.

After the user equipment 10 is powered on, the central carrier frequency obtaining module 403 firstly scans radio all frequency channels in an Evolved Universal Terrestrial Radio Access (E-UTRA) band to search for a central carrier frequency CCF (not illustrated).

Next the signal receiving module 404 further scans a frequency band where the central carrier frequency CCF is located to obtain receiving signals in the frequency band: the signal S_{M1} (at the power of 11dBm), the signal S_{M3} (at the power of 41dBm), the signal S_{H2} (at the power of 19dBm), the signal S_{H1} (at the power of 23dBm), the signal S_{H3} (at the power of 9dBm) and the signal S_{M2} (at the power of 7dBm).

Then the cell identification detecting module 405 detects cell identification information included in each of the receiving signals based upon contents of the receiving signals, wherein the detected cell identification information corresponds respectively to the small power base stations and the macro base stations in the heterogeneous network in Fig.1, and in this embodiment, for example, the cell identification detecting module 405 detects, based upon pilot signals in the receiving signals, that the cell identification information in the signal S_{M1} is CII _{M1} and corresponds to the macro base station MeNB1, the cell identification information in the signal S_{M3} is CII _{M3} and corresponds to the macro base station 13, the cell identification information in the signal S_{H2} is CII _{H2} and corresponds to the small power base station 12, the cell identification information in the signal S_{H1} is CII _{H1} and corresponds to the small power base station 11, the cell identification information in the signal S_{H3} is CII _{H3} and corresponds to the small power base station HeNB3, and the cell identification information in the signal S_{M2} is CII _{M2} and corresponds to the small power base station MeNB2.

Alternatively the cell identification detecting module 405 can detect the cell identification information included in the receiving signals S_{M1} and like based upon synchronization signals or reference signals in the receiving signals, and a repeated description thereof will be omitted here.

According to another embodiment of the invention, the signal receiving module 404 further comprises a signal selecting module 4041 with a preset strength threshold V_{threshold}=19dBm (not illustrated). Base stations and receiving signal strength corresponding thereto at the user equipment 10 side configured in this embodiment are the signal S_{M3} at power of 41dBm from the macro base station 13; the signal S_{H2} at power of 19dBm from the small power base station 12 and the signal S_{H1} at power of 23dBm from the small power base station 11 respectively; the signal S_{M2} at power of 7dBm from the macro base station MeNB2 and the signal S_{M1} at power of 11dBm from the macro base station MeNB1 respectively; and the signal S_{H3} at power of 9dBm from the small power base station HeNB3. The receiving signals with signal strength greater than or equal to the predetermined signal strength threshold V_{threshold} are selected and further delivered to the cell identification detecting module 405 for processing. Specifically, based on the power values of signals from the respective base stations, the signal selecting module 4041 can determine that the receiving signals with signal strength greater than or equal to the preset threshold V_{threshold} are only the signal S_{H2}, the signal S_{H1} and the signal S_{M3}, which come respectively from the small power base station 12, the small power base station 11 and the macro base station 13. Then the signal selecting module 4041 only delivers the receiving signals S_{H2}, S_{H1} and S_{M3} to the cell identification detecting module 405 for detecting cell identification information CII _{H2}, CII _{H1} and CII _{M3} included in the respective signals.

Then the base station selecting module 401 selects a small power base station, e.g., the small power base station 12, the small power base station 11 or the small power base station HeNB3, preferably among the base stations corresponding to the cell identification information output from the cell identification detecting module 405 and performs the access according to the cell identification information included in the receiving signal corresponding thereto at the user equipment 10 side. Alternatively according to another embodiment of the invention, based upon the signal strength information of the signals S_{H2}, S_{H1} and S_{M3} obtained in the signal receiving module 404, the base station selecting module 401 and the access module 402 selects preferably the cell identification information CII _{H1} included in the signal S_{H1} with the higher strength among the signals S_{H1} and S_{H2}, which have signal powers greater than or equal to the threshold V_{threshold}, from the small power base stations and determines the small power base station corresponding to the cell identification information CII _{H1} as the base station 11 and then accesses the base station 11.

According to an embodiment of the invention, the base station selecting module 401 determines whether there are small power base stations among the base stations corresponding to the cell identification information output from the cell identification detecting module 405. Specifically the base station selecting module 401 determines that the base station 11, the base station 12 and the base station HeNB3 corresponding to the signal S_{H1}, the signal S_{H2} and the signal S_{H3} are all small power base stations.

Secondly the base station selecting module 401 selects any one of the above three small power base stations, i.e., the base station 11, the base station 12 and the base station HeNB3, to perform the access according to the result of determination. Preferably the base station selecting module 401 selects, among the three small power base stations, a signal source base station corresponding to the signal with the largest signal strength received by the signal receiving module 404 to perform the access. Specifically, by comparing the signal strength information of the respective signals from the signal receiving module 404 (the signals from the signal receiving module 404 to the base station selecting module 401 are not illustrated), the base station selecting module 401 can determine that, among the small power base stations, i.e., the base station 11, the base station 12 and the base station HeNB3, the receiving signal with the largest signal strength of the signal receiving module 404 is the signal S_{H3} and the small power base station corresponding to the signal S_{H3} is the base station 11, and then the base station selecting module 401 instructs the access module 402 to access the base station 11.

According to another embodiment of the invention, only three macro base stations, i.e., the macro base station MeNB1, the macro MeNB2 and the macro base station 13, are configured in the communication system, and correspondingly the power of the signal S_{M1} is 11dBM, the power of the signal S_{M3} is 41dBM, and the power of the signal S_{M2} is 7dBM, where the signal with the largest signal strength is the signal S_{M3}, and the base station corresponding to the signal S_{M3} is the macro base station 13. Then the base station selecting module 401 selects the macro base station 13 and instructs the access module 402 to access the macro base station 13.

According to another embodiment of the invention, if the macro base station MeNB2 and the macro base station MeNB1 are configured and correspondingly their receiving signals at the user equipment 10 side are the signals S_{M2} and S_{M1} respectively at the power of 7dBm and 11dBm. And the small power base station HeNB3 is configured and correspondingly the receiving signal at the user equipment 10 side is the signal S_{H3} at the power of 9dBm. The powers of the above signals are all below a threshold Vthreshold=19dBm configured in the signal selecting module 4041. The base station selecting module 401 determines that the signal with the highest signal strength among the signals S_{M2}, S_{M1} and S_{H2} is the signal S_{M1} and the base station corresponding to the signal S_{M1} is the macro base station MeNB1, and then the base selecting module 401 instructs the access module 402 to access the macro base station MeNB1.

It shall be noted that the foregoing embodiments are merely exemplary but are not intended to limit the invention. Any technical solutions without departing from the spirit of the invention shall fall into the scope of the invention, and different technical features appearing in different embodiments can be used in various combinations to attain advantageous effects. Furthermore any reference numerals in the claims shall not be construed as limiting the claims where they appear; the term "comprising" will not preclude a device(s) or step(s) which are not listed in other claims or the description; the term "a" or "an" preceding a device will not preclude presence of "a plural of" such devices; a function(s) of a plurality of devices included in an apparatus can be performed in the same hardware or software module; and the terms "first", "second", "third", etc., are intended to mealy represent a name but not to suggest any specific order.

## Claims

1. A method of selecting an access base station in a user equipment of a wireless communication network, the method comprising the steps of:
D. the user equipment selecting, among at least one base station, a small power base station preferably to perform an access, wherein a signal of each of the at least one base station covers the user equipment.

2. The method according to claim 1, the method further comprising the steps of:
A. the user equipment scanning a plurality of radio frequency channels to obtain a central carrier frequency when the user equipment is powered on;
B. scanning a frequency band corresponding to the central carrier frequency to obtain at least one receiving signal; and
C. based upon the at least one receiving signal, detecting cell identification information included in each of the at least one receiving signal, wherein the detected cell identification information corresponds to one of the at least one base station respectively.

3. The method according to claim 2, before the step C, the method further comprising the step of:
selecting, from the at least one receiving signal, one or more receiving signal with signal strength which is greater than or equal to a predetermined value, and
wherein the step C comprises the step of:
- detecting cell identification information included in each of the one or more receiving signal with the signal strength which is greater than the predetermined value, and
the step D comprises the step of:
the user equipment selecting, among one or more base station corresponding to the detected cell identification information, the small power base station preferably to perform the access.

4. The method according to claim 3, the method further comprising the step of:
selecting the base station corresponding to a receiving signal with highest signal strength among at least one receiving signal with signal strength which is less than the predetermined value to perform the access, if no receiving signal with the signal strength which is greater than or equal to the predetermined value is selected.

5. The method according to claim 2, wherein the step C comprises:
based upon a pilot signal, a synchronization signal or a reference signal among the at least one receiving signal, detecting the cell identification information included in the each of the at least one receiving signal.

6. The method according to any one of claims 1 to 5, wherein the step D comprises:
D1. if the at least one base station includes at least one small power base station, the user equipment selecting a small power base station to perform the access, wherein among the at least one small power base station, the selected small power base station corresponds to a receiving signal with highest signal strength at the user equipment side.

7. The method according to any one of claims 1 to 5, wherein the step D comprises:
D2. if the at least one base station only includes at least one macro base station, the user equipment selecting a macro base station to perform the access, wherein among the at least one macro base station, the selected macro base station corresponds to a receiving signal with highest strength at the user equipment side.

8. The method according to any one of claims 1 to 5, wherein the step D comprises:
D3. if the at least one base station includes at least one small power base station and at least one macro base station, the user equipment selecting a small power base station to perform the access, wherein among the at least one small power base station, the selected small power base station corresponds to a receiving signal with highest strength at the user equipment side.

9. A selecting access apparatus for selecting an access base station in a user equipment of a wireless communication network, the apparatus comprising:
- a base station selecting module for selecting, among at least one base station with signals covering the user equipment, a small power base station preferably to perform an access; and
- an access module for performing the access of the user equipment to the small power base station.

10. The selecting access apparatus according to claim 9, wherein the base station selecting module further comprises:
- a first selecting sub-module for, if the at least one base station comprises at least one small power base station, selecting a small power base station to perform an access, wherein among the at least one small power base station, the selected small power base station corresponds to a receiving signal with the highest signal strength at the user equipment side.

11. The selecting access apparatus according to claim 10, wherein the base station selecting module further comprises:
- a second selecting sub-module for, if the at least one base station only includes at least one macro base station, selecting a macro base station to perform the access, wherein among the at least one macro base station, the selected macro base station corresponds to a receiving signal with highest strength at the user equipment side.

12. The selecting access apparatus according to claim 11, wherein the base station selecting module further comprises:
- a third selecting sub-module for, if the at least one base station includes at least one small power base station and at least one macro base station, selecting a small power base station to perform the access, wherein among the at least one small power base station, the selected small power base station corresponds to a receiving signal with highest strength at the user equipment side.

13. The selecting access apparatus according to any one of claims 9 to 12, the selecting access apparatus further comprising:
- a central carrier frequency obtaining module for the user equipment to scan a plurality of radio frequency channels to obtain a central carrier frequency when the user equipment is powered on;
- a signal receiving module for the user equipment to scan a frequency band corresponding to the central carrier frequency to obtain at least one receiving signal; and
- a cell identification detecting module for detecting cell identification information included in each of the at least one receiving signal based upon the at least one receiving signal.

14. The selecting access apparatus according to claim 13, wherein the signal receiving module further comprises:
- a signal selecting module for selecting, among the at least one receiving signal, at least one receiving signal with signal strength which is greater than or equal to a predetermined value.
